# EUROPÄISCHE PATENTSCHRIFT

(11) **EP 1 232 783 B1**
(45) Veröffentlichungstag und Bekanntmachung des Hinweises auf die Patenterteilung: **18.10.2006**
(21) Anmeldenummer: 02003531.7
(22) Anmeldetag: 15.02.2002
(51) Int. Cl.: B01D 53/50

(54) **Verwendung eines Produktes aus einem nicht-nassen Rauchgasentschwefelungsverfahren**
Use of a product from a dry flue gas desulphurisation process
Utilisation du produit d'un procédé de désulfurisation de gaz de fumée

(30) Priorität: 15.02.2001 DE 10107911
(43) Veröffentlichungstag der Anmeldung: 21.08.2002
(73) Patentinhaber: EnBW Kraftwerke AG, 70173 Stuttgart (DE)
(72) Erfinder: Doll, Friedrich, Dipl.-Ing., 70794 Filderstadt (DE); Kuhnle, Günter, Dr., 71394 Kernen (DE); Lenz, Andreas, Dipl.-Ing., 75365 Calw-Stammheim (DE); Meyer, Norbert, Dipl.-Ing., 73061 Ebersbach (DE); Strauss, Josef Herbert, Dipl.-Ing., 73249 Wernau (DE); Weigelt, Jürgen, Dipl.-Ing., 74081 Heilbronn (DE)
(74) Vertreter: Patentanwälte Ruff, Wilhelm, Beier, Dauster & Partner

(56) Entgegenhaltungen:
- WO-A-96/14138
- US-A- 5 565 180
- US-A- 6 143 263

## Beschreibung

Die Erfindung bezieht sich auf eine Verwendung eines SAV-Produktes und ähnlicher Produkte aus einem nicht-nassen, d.h. einem trockenen oder halbtrockenen Rauchgasentschwefelungsverfahren in einem Verfahren zur Nassentschwefelung eines Rauchgases, das eine Umwandlung solcher Produkte in Gips ermöglicht. Dabei bezeichnet der Begriff "SAV-Produkt" bekanntlich ein Sprühabsorptionsverfahrens-Produkt, das bei einer Rauchgasentschwefelung nach dem (halb-trockenen) Sprühabsorptionsverfahren anfällt, bei dem es sich im Gegensatz zur Nassentschwefelung um ein nicht-nasses Absorptionsverfahren handelt. Der Einsatz von SAV-Produkt bei der Nassentschwefelung soll eine Umwandlung des SAV-Produktes zu hochwertigem, z.B. in der Baustoffindustrie verwendbarem Gips ermöglichen, um dadurch geringwertige Verwertungen des SAV-Produktes, wie Deponierung und Untertagebau, zu vermeiden. Hauptbestandteil des SAV-Produktes ist typischerweise Calciumsulfit, meist in Halbhydrat-Form (CaSO₃×½H₂O). Daneben sind meist Gips-Dihydrat (CaSO₄×2H₂O), Kalkstein (CaCO₃), Kalk (CaO) oder Calciumhydroxid (Ca(OH)₂), sowie Chlorid, vor allem in Form von Alkali- und Calciumchloriden, enthalten. Produkte, die dem SAV ähnlich sind, sind anfallende Stoffe aus sonstigen halbtrockenen oder trockenen Verfahren zur Rauchgasentschwefelung.

Von dem dänischen Kraftwerksunternehmen Elsam wird eine Nassentschwefelung unter Verwendung von SAV-Produkt mit einer sogenannten Einkreiswäscher-Anlage eingesetzt, die einen Anlagentyp darstellt, bei dem das Rauchgas durch eine einzelne Wäscherstufe hindurchgeleitet wird, in die das Absorbens als Suspension eingebracht wird. Dabei wurde in einer anfänglichen Testphase der herkömmlicherweise als Absorbens verwendete Kalkstein in einem mehrtägigen Test zunächst teilweise und danach vollständig durch SAV-Produkt ersetzt. Es ergaben sich hierbei merkliche Probleme hinsichtlich AlFₓ-Inhibierung durch den Aluminium-Gehalt im SAV-Produkt, hinsichtlich zusätzlicher Belastung der Abwasserbehandlung durch im SAV-Produkt enthaltenes Chlorid sowie hinsichtlich eines relativ hohen Restkalkgehaltes des Gipses. Der pH-Wert der absorbierenden Suspension wurde bevorzugt bei ca. 5,2 gehalten. Auch bei einer Absenkung während des Tests auf 4,6 konnte der Restkalkgehalt des Gipses kaum unter 3% gehalten werden.

Neben den erwähnten Einkreiswäscher-Anlagen sind zur Rauchgas-Nassentschwefelung sogenannte Zweikreiswäscher-Anlagen mit einer Absorberstufe und einer Quencherstufe im Einsatz. Herkömmlicherweise wird auch in diesen Anlagen Kalkstein in Suspension als Absorbens eingesetzt. Das Rauchgas wird über die Quencherstufe und dann über die Absorberstufe geführt. In der Absorberstufe entsteht Calciumhydrogensulfit (Ca(HSO₃)₂), und das entsprechende Zwischenprodukt der Absorberstufe wird in die Quencherstufe geleitet, wo das Calciumhydrogensulfit unter zusätzlicher Sauerstoffzufuhr zu Calciumsulfat, d.h. Gips, umgewandelt wird.

In der Offenlegungsschrift WO 96/14138 A1 wird eine Anlage zur Rauchgas-Nassentschwefelung vorgeschlagen, die zusätzlich zu einem Wäscherturm, in welchem das Rauchgas mit einer versprühten, wasserbasierten Suspension in Kontakt gebracht wird, ein Sammeltank vorgesehen ist, in welchem der versprühte und vom Rauchgas mitgeführte Suspensionsnebel nach Abtrennung vom gereinigten Rauchgas zwecks Rückführung zum Wäscherturm gesammelt wird. Das Flüssigkeitsniveau im Sammeltank wird über dem Niveau der im Wäscherturm am weitesten oben angeordneten Sprühdüse gehalten, so dass der Sprühvorgang im Wesentlichen allein durch Schwerkraft getrieben erfolgen kann.

Der Erfindung liegt als technisches Problem die Bereitstellung einer neuartigen Verwendung von SAV-Produkten und ähnlichen Produkten bei der Rauchgas-Nassentschwefelung zugrunde, die eine Verwertung solcher Produkte durch Umwandlung in Gips mit gutem Umwandlungswirkungsgrad ermöglicht, ohne dabei die Qualität der Rauchgasentschwefelung zu beeinträchtigen.

Die Erfindung löst dieses Problem durch die Bereitstellung einer Verwendung mit den Merkmalen des Anspruchs 1. Bei dieser Verwendung kommt ein Mehrkreiswäscher zum Einsatz, insbesondere ein Zweikreiswäscher, mit Quencher- und Absorberstufe, wobei sich die zugehörige Rauchgas-Nassentschwefelung dadurch auszeichnet, dass als Absorbens das SAV-Produkt bzw. ein ähnliches Produkt direkt in die Quencherstufe und/oder in die Absorberstufe und zusätzlich Kalkstein in die Absorberstufe eingebracht werden. Außerdem erfolgt die SAV-Produktzugabe in die Quencherstufe und/oder Absorberstufe in kontrollierter Weise derart, dass der pH-Wert in der Quencherstufe innerhalb eines Sollbereiches und niedriger als der pH-Wertebereich der Absorberstufe bleibt.

Durch die getrennt kontrollierbare Einstellung des pH-Wertes in der Absorberstufe einerseits und in der Quencherstufe andererseits lässt sich ein sicherer Entschwefelungsvorgang durch Kalkstein in der Absorberstufe bei höherem pH-Wert und gleichzeitig eine gute, effektive Umwandlung des eingesetzten Produktes zu Gips in der Quencherstufe bei niedrigerem pH-Wert erreichen.

Im Rahmen einer Weiterbildung der Erfindung nach Anspruch 2 wird der pH-Wert in der Quencherstufe kleiner als 4,8 gehalten, während der pH-Wert in der Absorberstufe größer als 5,8 ist. In einer weiteren Ausgestaltung dieser Maßnahme wird gemäß Anspruch 3 der pH-Wert in der Quencherstufe zwischen etwa 4,4 und etwa 4,8 und der pH-Wert in der Absorberstufe zwischen etwa 5,9 und etwa 6,1 gehalten. Es zeigt sich, dass mit diesen pH-Wert-Einstellungen einerseits eine sichere Entschwefelung in der Absorberstufe und andererseits eine gute Gipsumwandlung des eingesetzten Produktes und von Absorberstufen-Zwischenprodukt in der Quencherstufe erzielt werden.

Eine Weiterbildung der Erfindung nach Anspruch 4 ermöglicht eine vorteilhafte Verwertung von pulverförmig vorliegendem Produkt, indem dieses in eine aufnehmende Flüssigkeit eingerührt wird, um eine Produktsuspension zu bilden, die dann dosierbar dem Mehrkreiswäscher zugeführt wird. Diese Maßnahme vermeidet Staubprobleme bei der Verwertung des pulverförmigen Produktes im Mehrkreiswäscher und ermöglicht durch die Verdünnung in Form der Produktsuspension eine gute Dosierbarkeit der Produktzugabe in den Mehrkreiswäscher.

In einer weiteren Ausgestaltung dieser Vorgehensweise wird die Produktsuspension gemäß Anspruch 5 einer Vorneutralisierungsbehandlung unterzogen, durch die ihr pH-Wert gesenkt wird, so dass die Produktsuspension mit relativ hohem Massenstrom in den Mehrkreiswäscher eingebracht werden kann, ohne dass dadurch der pH-Wert insbesondere in der Quencherstufe den gewünschten Sollbereich über- oder unterschreitet.

Bei einer Weiterbildung der Erfindung nach Anspruch 6 erfolgt die Zuführung des Produktes in steuerbaren Anteilen direkt in die Quencherstufe und/oder in die Absorberstufe, die abhängig davon gewählt werden, wie die Zusammensetzung des verwendeten Produktes ist. So kann im Fall von eingesetztem Produkt mit relativ hohem Gehalt an Kalkstein oder ungelöschtem Kalk ein hoher Anteil des Produktes in die Absorberstufe eingebracht werden, so dass dort der Kalkstein bzw. ungelöschte Kalk praktisch vollständig in Calciumsulfit umgewandelt wird, bevor das entsprechende Zwischenprodukt in die Quencherstufe zur möglichst vollständigen Gipsumwandlung geleitet wird.

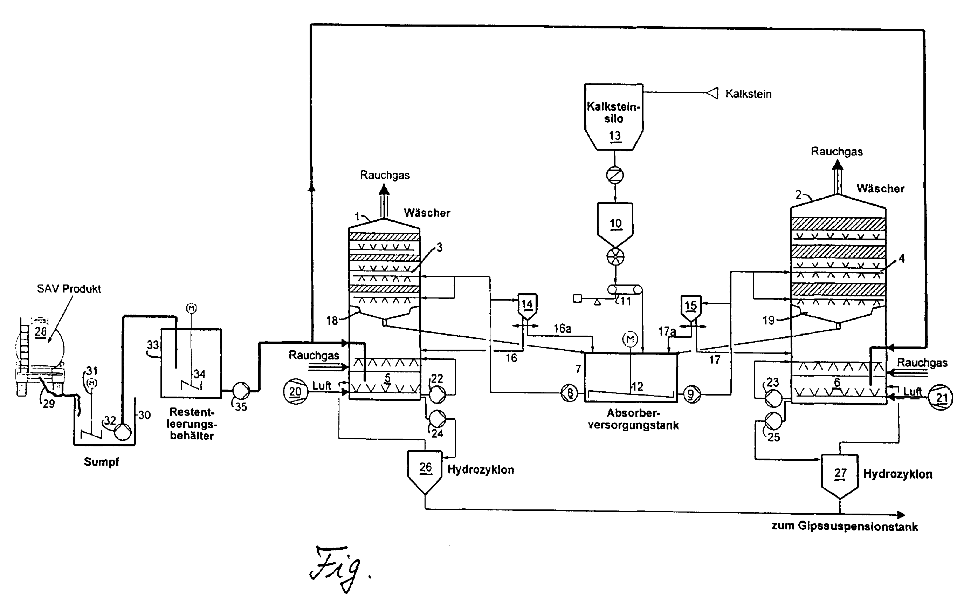

Bevorzugte Ausführungsformen der Erfindung werden nachfolgend unter Bezugnahme auf die Zeichnung näher erläutert.
Die einzige Figur zeigt eine Zweikreiswäscher-Anlage mit zwei Wäschern zur Rauchgas-Nassentschwefelung unter Einsatz eines SAV-Produktes.

Die in der Figur gezeigte Anlage eignet sich zur Nassentschwefelung eines Rauchgases unter Einsatz eines SAV-Produktes oder eines ähnlichen Produktes aus einem halbtrockenen oder trockenen Rauchgasentschwefelungsverfahren. Die als ZweikreisWäscher konzipierte Anlage beinhaltet zwei gleichartige, parallel betriebene Wäschertürme 1, 2 mit je einer Absorberstufe 3, 4 im oberen Bereich und einer Quencherstufe 5, 6 im unteren Bereich. In die Absorberstufen 3, 4 wird über mehrere Sprühebenen ein Kalkstein/Wasser-Gemisch, das in einem gemeinsamen Absorberversorgungstank 7 bereitgestellt wird, jeweils über eine Förderpumpe 8, 9 eingebracht. In den Absorberversorgungstank 7 wird Kalkstein aus einem Kalksteintagessilo 10 abhängig von der hierzu erfassten Schwefelfracht des zu entschwefelnden Rauchgases gravimetrisch mit einer Dosierbandwaage 11 zudosiert und dort mit Wasser verdünnt, d.h. mittels eines Rührwerks 12 zu einer Kalksteinsuspension aufbereitet. Das Kalksteintagessilo 10 wird von einem Kalksteinvorratssilo 13 gespeist, das mit gemahlenem Kalkstein gefüllt wird, der mittels LKW-Silowagen angeliefert wird.

Ein Teil der aus dem Absorberversorgungstank 7 geförderten Kalksteinsuspension wird parallel in jeweils einen mit Verschiebewagen verfahrbaren Trichter 14, 15 abgezweigt. Direkt unterhalb der Trichter 14, 15 ist ein weiterer Trichter mit je zwei Ablaufleitungen 16 und 16a bzw. 17 und 17a installiert, von denen eine zurück in den Absorberversorgungstank 7 und die andere zu einem der beiden Quencher 5, 6 führt. Je nach Stellung des Verschiebewagens wird die aus dem Absorberversorgungstank 7 geförderte Kalksteinsuspension in den Absorberversorgungstank 7 über die zugehörigen Leitungen 16a, 17a rückgeschleust oder in die Quencher 5, 6 über die zugehörigen Leitungen 16, 17 ausgeschleust. Durch das Ausschleusen wird die Kalksteinsuspension in steuerbaren Anteilen der zugehörigen Quencherstufe 5, 6 zugeführt, um die im dort erforderlichen Parameter, wie pH-Wert, Dichte und Höhenstand, einzustellen bzw. aufrecht zu erhalten.

Das zu entschwefelnde Rauchgas wird in die Quencherstufen 5, 6 eingeleitet, erfährt dort eine Vorentschwefelung und gelangt im jeweiligen Wäscherturm 1, 2 nach oben und somit anschließend durch die jeweilige Absorberstufe 3, 4 hindurch, wo es vollends entschwefelt wird, so dass es den jeweiligen Wäscherturm 1, 2 oben als nahezu vollständig entschwefeltes Rauchgas verlässt.

Das durch den Entschwefelungsvorgang in den Absorberstufen 3, 4 entstehende Zwischenprodukt gelangt entgegen dem Rauchgasstrom in den Wäschertürmen 1, 2 nach unten in je einen großen Sammeltrichter (Schüssel) 18, 19 und von dort zurück in den Absorberversorgungstank 7. Aus dem Absorberversorgungstank 7 wird das Zwischenprodukt unter Beachtung der Prozessbedingungen über die Verschiebewagen bzw. Trichter 14, 15 in den jeweiligen Quencher 5, 6 ausgeschleust.

In die Quencherstufen 5, 6 wird außerdem mittels eines jeweils zugehörigen Verdichters 20, 21 Luftsauerstoff eingeblasen, der zur Aufoxidation von Calciumhydrogensulfit zu Gips dient. In den Quencherstufen 5, 6 wird das Waschmaterial mittels einer jeweiligen Zirkulationspumpe 22, 23 im Kreislauf geführt, indem es im Bodenbereich angesaugt und in einer darüber liegenden Ebene wieder eingedüst wird. Gipssuspension aus dem unteren Bodenbereich der Quencherstufen 5, 6 wird über eine jeweilige Förderpumpe 24, 25 je einem Hydrozyklon 26, 27 zugeführt, von wo die leichteren Bestandteile in die Quencherstufen 5, 6 rückgeführt werden. Die übrige Gipssuspension wird je nach Prozessbedingungen, insbesondere Dichte und Höhenstand im jeweiligen Quencher 5, 6, in einen Gipssuspensionsbehälter oder zurück in den jeweiligen Quencher 5, 6 geführt. Vom Gipssuspensionsbehälter aus wird die Gipssuspension in herkömmlicher und daher hier nicht näher erläuterter Weise weiterbehandelt, z.B. mittels Vakuumtrommelfiltern oder Vakuumbandfiltern entwässert und gewaschen und in einem Trockner thermisch getrocknet.

Des Weiteren ist die Anlage dafür ausgelegt, durch Tankwagen 28 pulverförmig angeliefertes SAV-Produkt zusätzlich zum Kalkstein als Absorbens zu nutzen und dabei in Gips umzuwandeln. Dazu wird das SAV-Produkt mittels eines Schlauches 29 aus dem Tankwagen 28 in einen Pumpensumpf 30 gefördert, der mit einem Rührwerk 31 und einer Tauchpumpe 32 ausgerüstet ist. Vom Pumpensumpf 30 führt eine Tauchleitung in einen Restsammelbehälter 33, der ebenfalls mit einem Rührwerk 34 ausgerüstet ist. Aus dem Restsammelbehälter 33 wird die dort bereitstehende SAV-Produktsuspension mittels einer Förderpumpe 35 parallel in die beiden Quencherstufen 5, 6 eingebracht.

Hauptkomponente der Zusammensetzung des angelieferten SAV-Produktes ist in der Regel Calciumsulfit-Halbhydrat, weitere Bestandteile in nennenswerten Anteilen sind Gips-Dihydrat, Calciumhydroxid, Calciumcarbonat und Calciumchlorid. Der pH-Wert des SAV-Produktes liegt meist im Bereich zwischen 12 und 14. Die mittlere Teilchengröße des SAV-Produktpulvers liegt meist in der Größenordnung von wenigen 10µm bis wenigen 100µm, und typische Schüttgewichte liegen im Bereich von z.B. 300kg/m³ bis 700kg/m³.

Der Pumpensumpf 30 dient außerdem als Leckagenauffangbehälter, in welchem bei Auftreten eines Lecks das austretende Material aufgefangen werden kann. Der Restsammelbehälter 33 dient zusätzlich als Auffangbehälter bei Restentleerungen der Anlage z.B. im Wartungsfall. Der Pumpensumpf 30 und der Restsammelbehälter 33 bilden folglich mit den zugehörigen Rührwerken 31, 34 und Pumpen 32, 35 eine Aufbereitungsstufe, in welcher das pulverförmig angelieferte SAV-Produkt zu einer in der Anlage einsatzfähigen SAV-Produktsuspension aufbereitet wird.

Speziell wird zur Bereitung der SAV-Produktsuspension der Pumpensumpf 30 vor dem Einpumpen des SAV-Produktpulvers bis auf ca. 80% bis 90% seiner maximalen Füllhöhe mit Prozesswasser und/oder Suspension aus dem Restsammelbehälter 33 gefüllt, um eine ausreichende Tauchrohrüberdeckung zu gewährleisten und genügend Flüssigkeit zur Aufnahme und ersten Verdünnung des SAV-Produktes bereitzustellen. Aus dem Pumpensumpf 30 wird das suspendierte SAV-Produkt mit der Tauchpumpe 32 in den Restsammelbehälter 33 überführt, wobei während des Entladevorgangs der Höhenstand im Pumpensumpf 30 konstant gehalten wird, um Staubprobleme zu vermeiden. Dazu wird abgepumpte Suspension durch Prozesswasser oder Flüssigkeit aus dem Restsammelbehälter 33 ergänzt. Die mit SAV-Produkt versetzte Suspension wird kontinuierlich aus dem Pumpensumpf 30 entfernt, um eine Übersättigung der Suspension und dadurch verursachte Ablagerungen am Behälterboden zu vermeiden.

Nachfolgend wird genauer auf das mit der gezeigten Anlage durchführbare Rauchgas-Nassentschwefelungsverfahren unter Nutzung von SAV-Produkt eingegangen. Dem Entschwefelungsverfahren liegt, ausgehend von einem Einsatz von Kalkstein als Absorbens, folgende chemische Reaktionskette zugrunde. In einer ersten Reaktion

2CaCO₃+2SO₂+H₂O → 2CaSO₃×½H₂O+2CO₂ (1)

bindet der Kalkstein (CaCO₃) im Rauchgas enthaltenes Schwefeldioxid (SO₂) mit dem in der Kalksteinsuspension enthaltenen Wasser zu Calciumsulfit-Halbhydrat (CaSO₃×½H₂O), das sich in einer zweiten Reaktion

CaSO₃×½H₂O+SO₂+½H₂O → Ca (HSO₃)₂ (2)

zu dem Zwischenprodukt Calciumhydrogensulfit (Ca(HSO₃)₂) umwandelt, welches unter Sauerstoffzufuhr in einer dritten Reaktion

2Ca(HSO₃)₂+O₂+2H₂O → 2CaSO₄×2H₂O+2SO₂ (3)

zu Gips (CaSO₄) in Form von Gips-Dihydrat (2CaSO₄×2H₂O) aufoxidiert wird. Letzteres kann dann in der anschließenden Gipsbehandlung bis zu einer ausreichend niedrigen Restfeuchte von ca. maximal 0,5% getrocknet werden.

In den beiden Absorberstufen 3, 4 laufen hauptsächlich die erste Reaktion (1) und die mittlere Reaktion (2) ab, während in den zusätzlich mit Luftsauerstoff versorgten Quencherstufen 5, 6 hauptsächlich die mittlere Reaktion (2), soweit dort noch Calciumsulfit-Halbhydrat vorliegt, und die dritte Reaktion (3) ablaufen.

Die Prozessparameter sind für die Absorberstufen 3, 4 einerseits und die Quencherstufen 5, 6 andererseits unterschiedlich eingestellt, und zwar optimal abgestimmt auf den jeweiligen Funktionszweck, d.h. auf eine möglichst vollständige Entschwefelung des Rauchgases in den Absorberstufen 3, 4 und eine möglichst vollständige Umwandlung in qualitativ zufriedenstellenden Gips in den Quencherstufen 5, 6. Dazu wird insbesondere der pH-Wert für die Absorberstufen 3, 4 anders gewählt als für die Quencherstufen 5, 6. In den Absorberstufen 3, 4 stellt sich durch die Zugabe der Kalksteinsuspension aus dem Absorberversorgungstank 7 typischerweise ein pH-Wert im Bereich von etwa 5,9 bis etwa 6,1 ein. Hingegen wird der pH-Wert in den Quencherstufen 5, 6 auch durch entsprechend dosierte Zugabe der SAV-Produktsuspension in einem niedrigeren Sollwertbereich von vorzugsweise zwischen etwa 4,4 und 4,8 gehalten.

Außerdem wird durch die Prozessregelung dafür gesorgt, dass in den Quencherstufen 5, 6 ein vorgebbarer Dichtebereich des Waschmaterials von z.B. etwa 1,06g/cm³ bis 1,10g/cm³ und ein vorgebbarer Bereich für die elektrische Leitfähigkeit von z.B. nicht mehr als 80mS/cm eingehalten werden, um Verschleißprobleme minimal zu halten und Material- und Abwassergrenzwerte sicher einzuhalten. Die Einhaltung des vorgegebenen Dichtebereichs ist zudem für den Vorentschwefelungsvorgang und das Gipskristallwachstum in den Quencherstufen 5, 6 von Vorteil.

Durch das solchermaßen geregelte Einbringen von SAV-Produkt in die Quencherstufen 5, 6 in kontrollierten Dosierungen, wozu herkömmliche, nicht näher gezeigte Komponenten eingesetzt werden, wie Regelventile und eine geeignete Anlagensteuereinheit, wird gewährleistet, dass zum einen der Vorentschwefelungsprozess und die Gipsbildung nicht beeinträchtigt und zum anderen das SAV-Produkt mit zufriedenstellendem Umwandlungswirkungsgrad in Gips umgewandelt wird.

Die obige Beschreibung eines vorteilhaften Ausführungsbeispieles zeigt, dass sich durch die erfindungsgemäße Verwendung von SAV- und ähnlichen Produkten Rauchgase sicher nassentschwefeln lassen und dabei das (SAV-)Produkt in Gips umgewandelt werden kann, wobei durch die prozesstechnische Trennung des sicheren Entschwefelungsvorgangs in der Absorberstufe vom Gipsumwandlungsprozess in der Quencherstufe eine gegenseitige Beeinträchtigung dieser beiden Prozesse vermieden wird, die optimal bei unterschiedlichen pH-Werten ablaufen.

Außer der beschriebenen sind selbstverständlich weitere Verfahrensmodifikationen möglich. So kann eine Anlage bei Bedarf mit nur einem statt den beiden gezeigten parallelen Wäschertürmen 1, 2 verwendet werden. Als weitere Variante kann bei Bedarf ein Teil der SAV-Produktsuspension in die Absorberstufe eingeleitet werden. Dies ist z.B. in Fällen zweckmäßig, in denen das eingesetzte SAV-Produkt einen relativ hohen Anteil an Calciumcarbonat oder Calciumhydroxid aufweist, da diese Bestandteile dann über die obige erste Reaktion (1) unter den hierfür ausgelegten Bedingungen in der Absorberstufe umgesetzt werden können. In einer speziellen Variante kann eine Zuführung von SAV-Produkt mit steuerbaren Anteilen in die Absorberstufe einerseits und die Quencherstufe andererseits abhängig von der zu diesem Zweck erfassten Zusammensetzung des SAV-Produktes vorgesehen sein.

In einer weiteren Verfahrensvariante ist eine Vorneutralisation des SAV-Produktes bei dessen Aufbereitung vorgesehen, z.B. durch Versetzen mit Schwefelsäure im Pumpensumpf und/oder im Restsammelbehälter, um den pH-Wert der SAV-Produktsuspension von typischerweise 12 bis 14 auf einen niedrigeren Bereich abzusenken, z.B. auf 5,8 bis 6,1 für die Einleitung in die Absorberstufe oder auf 4,4 bis 4,8 für die Einleitung in die Quencherstufe. Dies erleichtert die Einhaltung des gewünschten pH-Wertes in der Absorber- bzw. in der Quencherstufe und ermöglicht einen erhöhten Massenstrom an einsetzbarem SAV-Produkt, für den dann als Grenzparameter primär die maximal verträgliche Dichte und elektrische Leitfähigkeit zu beachten sind.

In weiteren alternativen Verfahrensrealisierungen wird das SAV-Produktpulver in ein Silo mit integrierter Entstaubungstechnik eingebracht, unter dem ein Mischer zum Anmaischen des SAV-Produktpulvers mit Wasser angeordnet ist. Von dort kann das angemaischte SAV-Produkt in den Restsammelbehälter gefördert oder alternativ ohne weitere Verdünnung mit entsprechend reguliertem Massenstrom direkt in die Quencherstufe und/oder in die Absorberstufe eingeleitet werden.

## Patentansprüche

1. Verwendung eines SAV-Produktes und ähnlicher Produkte aus einem nicht-nassen Rauchgasentschwefelungsverfahren in einem Verfahren zur Nassentschwefelung eines Rauchgases, das eine Umwandlung solcher Produkte in Gips ermöglicht,
**dadurch gekennzeichnet, dass**
- das Rauchgas seriell über die Quencherstufe (5, 6) und eine Absorberstufe (3, 4) eines Mehrkreiswäschers geführt wird, dem als Absorbens das Produkt in die Quencherstufe und/oder in die Absorberstufe und Kalkstein in die Absorberstufe zugeführt wird, wobei das Zwischenprodukt der Absorberstufe in die Quencherstufe geleitet wird, und
- die Produktzugabe in kontrollierter Weise derart erfolgt, dass der pH-Wert in der Quencherstufe innerhalb eines Sollbereiches unterhalb des pH-Wertebereiches der Absorberstufe gehalten wird.

2. Verwendung nach Anspruch 1, weiter **dadurch gekennzeichnet, dass** der pH-Wert in der Quencherstufe kleiner als 4,8 gehalten wird, während der pH-Wert in der Absorberstufe über 5,8 liegt.

3. Verwendung nach Anspruch 2, weiter **dadurch gekennzeichnet, dass** der pH-Wert in der Quencherstufe innerhalb eines Sollbereiches zwischen etwa 4,4 und etwa 4,8 und der pH-Wert in der Absorberstufe innerhalb eines Sollbereiches zwischen etwa 5,9 und etwa 6,1 gehalten wird.

4. Verwendung nach einem der Ansprüche 1 bis 3, weiter **dadurch gekennzeichnet, dass** pulverförmig anstehendes Produkt in einer Aufbereitungsstufe (30 bis 35) in eine aufnehmende Flüssigkeit unter Bildung einer Produktsuspension eingerührt wird, die dann dem Mehrkreiswäscher dosierbar zugeführt wird.

5. Verwendung nach Anspruch 4, weiter **dadurch gekennzeichnet, dass** die Produktsuspension einer ihren pH-Wert senkenden Vorneutralisierungsbehandlung unterzogen wird.

6. Verwendung nach einem der Ansprüche 1 bis 5, weiter **dadurch gekennzeichnet, dass** das Produkt in steuerbaren, von der Zusammensetzung des Produktes abhängigen Anteilen direkt in die Quencherstufe und/oder in die Absorberstufe zugeführt wird.

## Claims

1. Use of an SAP product and similar products in a non-wet flue gas desulfuring procedure in a method for the wet desulfuring of a flue gas which enables such products to be converted into gypsum,
**characterized in that**:
- the flue gas is serially fed through a quencher unit (5, 6) and an absorber unit (3, 4) of a multiple circuit scrubber to which are supplied the product in the quencher unit and/or the absorber unit as an absorbent and limestone in the absorber unit, wherein the intermediate product of the absorber unit is guided to the quencher unit, and
- the product is supplied in a controlled manner so that the pH value in the quencher unit is maintained within a target range below the pH value of the absorber unit.

2. Use according to claim 1, further **characterized in that** the pH value in the quencher unit is kept less than 4.8, while the pH value in the absorber unit lies above 5.8.

3. Use according to claim 2, further **characterized in that** the pH value in the quencher unit lies within a target range between approximately 4.4 and approximately 4.8, and the pH value in the absorber unit is maintained within a target range between approximately 5.9 and approximately 6.1.

4. Use according to one of claims 1 to 3, further **characterized in that** the product present as a powder is stirred into a receiving liquid to form a product suspension in a preparation unit (30 to 35), and the suspension is then portioned to the multiple circuit scrubber.

5. Use according to claim 4, further **characterized in that** the product suspension is subjected to a pre-neutralization treatment to lower its pH.

6. Use according to one of claims 1 to 5, further **characterized in that** the product is fed directly to the quencher unit and/or the absorber unit in controllable portions depending on the composition of the product.

## Revendications

1. Utilisation d'un produit SAV et de produits analogues issus d'un procédé de désulfuration à sec des gaz de fumée dans un procédé de désulfuration par lavage d'un gaz de fumée qui permet une transformation de tels produits en plâtre,
**caractérisé en ce que**
- le gaz de fumée est amené en série à-travers une étape de désactivation (5,6) et une étape d'absorption (3,4) d'un laveur à gaz à plusieurs cycles auquel sont amenés le produit comme absorbant dans l'étape de désactivation et/ou dans l'étape d'absorption et du calcaire dans l'étape d'absorption, le produit intermédiaire de l'étape d'absorption étant conduit dans l'étape de désactivation et
- l'alimentation contrôlée en produit s'effectue de telle manière que le pH dans l'étape de désactivation est maintenu dans une gamme de valeurs obligatoires, inférieure à la gamme de pH de l'étape d'absorption.

2. Utilisation selon la revendication 1, **caractérisé en outre en ce que** le pH dans l'étape de désactivation est maintenu sous la valeur 4,8, tandis que le pH dans l'étape d'absorption est supérieur à 5,8.

3. Utilisation selon la revendication 2, **caractérisé en outre en ce que** le pH dans l'étape de désactivation est maintenu dans une gamme de valeurs obligatoires situées entre 4,4 environ et 4,8 environ et le pH dans l'étape d'absorption est maintenu dans une gamme de valeurs obligatoires situées entre 5,9 environ et 6,1 environ.

4. Utilisation selon l'une quelconque des revendications 1 à 3, **caractérisé en outre en ce que** du produit pulvérulent est incorporé, lors d'une étape de préparation (30 à 35), dans un liquide d'accueil, pour former une suspension de produit qui est ensuite amenée de façon dosable au laveur à gaz à plusieurs cycles.

5. Utilisation selon la revendication 4, **caractérisé en outre en ce que** la suspension de produit est soumise à un traitement de pré-neutralisation à pH décroissant.

6. Utilisation selon l'une quelconque des revendications 1 à 5, **caractérisé en outre en ce que** le produit est directement amené dans l'étape de désactivation et/ou dans l'étape d'absorption, en parts réglables en fonction de la composition du produit.
